Europäisches Patentamt

European Patent Office

Office européen des brevets

(19)

(11) Numéro de publication: **0 066 519**
**B1**

(12) **FASCICULE DE BREVET EUROPEEN**

(45) Date de publication du fascicule du brevet: **18.12.85**

(21) Numéro de dépôt: **82400996.3**

(22) Date de dépôt: **28.05.82**

(51) Int. Cl.⁴: **B 64 D 15/16**

(54) **Dégivreur pneumatique pour avions.**

(30) Priorité: **03.06.81 FR 8110980**

(43) Date de publication de la demande:
**08.12.82 Bulletin 82/49**

(45) Mention de la délivrance du brevet:
**18.12.85 Bulletin 85/51**

(84) Etats contractants désignés:
**DE GB IT NL**

(56) Documents cités:
**FR-A- 721 185**
**FR-A-1 271 461**
**FR-A-1 534 111**
**FR-A-2 107 884**
**US-A-3 008 214**

(73) Titulaire: **Caoutchouc Manufacturé et Plastiques**
**Société Anonyme dite:**
**49, rue Jean-Jaurès**
**F-95870 Bezons (FR)**

(72) Inventeur: **Bac, Jean-Claude**
**25 rue des Bleuets**
**F-76650 Le Petit Couronne (FR)**

Courier Press, Leamington Spa, England.

EP 0 066 519 B1

## Description

L'invention est relative aux gaines de dégivrage à chambres gonflables multiples confectionnées en tissu caoutchouté utilisées pour éliminer la glace se formant sur certaines surfaces d'aéronef, par exemple sur les bords d'attaque des ailes d'avion. Ces gaines de dégivrage comprennent généralement des chambres tubulaires allongées juxtaposées parallèlement et reliées à un système de gonflage permettant, par gonflage et dégonflage intermittents, de déformer les chambres pour briser la couche de glace accumulée sur la surface extérieur de la gaine.

Dans un type de construction connu illustré par exemple dans le brevet français 1.271.461 les chambres tubulaires de la gaine sont formées individuellement chacune avec un tube aplati constitué d'une bande de tissu étroite repliée longitudinalement pour joindre ses bords. Ces chambres sont juxtaposées parallèlement et prises en sandwich entre une couche de base caoutchoutée à fixer sur le bord de l'aile et une couche de revêtement caoutchoutée élastiquement déformable. Ce type de construction est compliqué et couteux.

Un autre type de construction connu et illustré par exemple dans le brevet français n° 1.534.111 consiste à réaliser les chambres gonflables en réunissant deux couches de tissu caoutchouté superposées au moyen de lignes de coutures espacées parallèlement, l'ensemble étant pris en sandwich entre une couche de base et une couche de revêtement. Ce type de construction est encore exigeant en main-d'oeuvre de fabrication et les coutures traversant les tissus constituent des zones critiques sujettes à des défaillances prématurées du fait qu'elles sont intensément sollicitées en service par les extensions des chambres gonflées et dégonflées de façon répétée.

Dans le but d'eviter ces inconvénients l'invention propose un dégivreur pneumatique à chambres gonflables multiples en tissu caoutchouté, dans lequel l'ensemble des chambres ou d'un groupe de chambre est constitué d'un tissu tricoté double caoutchouté sur ses faces extérieures et formant deux couches séparées réunies suivant des zones linéaires espacées intertricotées d'une couche à l'autre pour délimiter des chambres caractérisé en ce que les zônes linéaires intertricotées sont orientées dans le sens longitudinal du tricot et ce tricot double est un tricot Jersey à taux d'extensibilité transversale égal à au moins deux fois son taux d'extensibilité longitudinale.

Ce dégivreur à chambres gonflables multiples est particulièrement intéressante à divers points de vue. D'une part sur le plan de la fabrication, l'artible peut être obtenu simplement par caoutchoutage du tissu tricoté, par exemple par enduction ou calandrage de caoutchouc sur les deux faces extérieures du tricot, ce qui élimine tout le travail de confection des chambres gonflables puisque ces chambres sont obtenues directement et automatiquement sur le métier de tricotage. Cela réduit fortement le nombre et la durée des interventions manuelles pour la fabrication de l'article, d'où un coût de fabrication plus réduit. Lors du caoutchoutage du tissu on peut s'arranger pour faire déborder les couches de revêtement en caoutchouc et les joindre sur le pourtour du tissu pour obtenir les zones de fermeture étanches.

En fonctionnement, le dégivreur est fixé par une de ses faces sur la surface à dégivrer, généralement par collage. Cette fixation a pour effet de bloquer la face interne du dégivreur et de la rendre inextensible en tous les sens. Lors du gonflage des chambres, seule la face externe du dégivreur reste libre de s'allonger pour permettre la dilatation des chambres et la fragmentation de la couche de glace qui s'est formée au dessus de cette face externe. L'utilisation d'un tricot à extensibilité transversale plus grande que l'extensibilité longitudinale ainsi que l'orientation longitudinale des zones de liaison des deux faces du tricot, par rapport au sens de tricotage, a pour effet de permettre une déformation transversale plus grande et plus facile des chambres lors du gonflage, ce qui favorise le bris de la glace sans avoir à appliquer pour ce gonflage une pression d'air considérable qui serait de surcroit préjudiciable à la durée de vie du dispositif.

D'un autre côté, la délimitation des chambres gonflables par des zones linéaires de liaison intertricotées permet d'avoir dans ces zones de liaison un maximum de continuité puisque ce sont les mêmes deux fils constituant les deux couches distinctes du tricot qui viennent s'entrelacer dans les zones de liaison. En conséquence, les efforts résultant des mouvements d'extension auxquels sont soumis les parois des chambres gonflabes se répartissent au niveau des liaisons dans toutes les mailles intertricotées et du fait de la forme bouclée des fils formant ces mailles, les efforts de tension sont particulièrement bien distribués. Ces zones de liaison ne constituent donc plus des zones aussi critiques et cela permet d'augmenter la durée de vie de l'article.

Pour ces dégivreurs pneumatiques, il y a intérêt pour l'efficacité du dégivrage à ce que les chambres voisines soient aussi rapprochées que possible. Pour cela il est avantageux que les zones linéaires de liaison intertricotées des couches ne s'étendent transversalement que sur un nombre faible de rangées longitudinales du tricot.

La largeur de ces zones de liaison peut être limitée à environ 2 à 5 rangées longitudinales voisines de mailles. Avec de telles zones de liaison étroites et en s'arrangeant aussi pour que le caoutchoutage des faces extérieures du tricot ne s'infiltre pas dans ces zones de liaison, on peut encore obtenir que ces zones ne soient pas étanches dans le sens transversal de façon à permettre une diffusion de l'air de gonflage d'une chambre à l'autre. De cette façon, l'ensemble des chambres ou d'un groupe de chambres peut être relié au système de gonflage par une seule valve branchée sur une seule des chambres, le gonflage des autres chambres se faisant par diffusion transversale de l'air à travers les zones de liaison.

Alternativement, si les zones de liaison sont étanches ou insuffisamment perméables transversalement pour autoriser cette diffusion au degré souhaitable, les diverses chambres longitudinales peuvent être reliées en un point quelconque de leur longueur à une chambre ou canal transversal d'alimentation communiquant avec elles par des orifices appropriés. On peut aussi réserver dans les zones de liaison des passages transversaux de communication entre les chambres voisines.

La matière du textile utilisé pour ce tricot double, le titre et le genre du fil, la finesse de la maille ainsi que les caractéristiques résultantes du tricot obtenu (tels que son poids unitaire, son degré d'extensibilité etc...) peuvent évidemment varier dans l'ensemble de la gamme des dispositifs réalisables. A titre d'exemple seulement indicatif, de bons résultats ont été obtenus dans le cas de dégivreurs avec un tricot Jersey en fil de polyamide 66 de 110 deniers, ce tricot présentant environ 11 colonnes longitudinales de mailles/cm et 12 rangées transversales de mailles/cm.

Ce tricot présentait avant enduction avec du caoutchouc un poids de l'ordre de 250 g/m2 et un taux d'allongement sous 20 daN de 40% dans le sens longitudinal et de 105% dans le sens transversal. La largeur transversale des chambres 10 était de l'ordre de 30 mm et la largeur des zones de liaison de 2 mm.

Un tel tricot peut être obtenu sur métier à tricoter circulaire de type en soi connu avec des zones linéaire de liaison s'étendant dans le sens longitudinal du tricot. L'espacement de ces zones de liaison, c'est à dire la largeur des chambres gonflables ainsi que la largeur des zones de liaison peuvent être choisies à volonté de façon régulière ou irrégulière selon les types de dispositifs à réaliser.

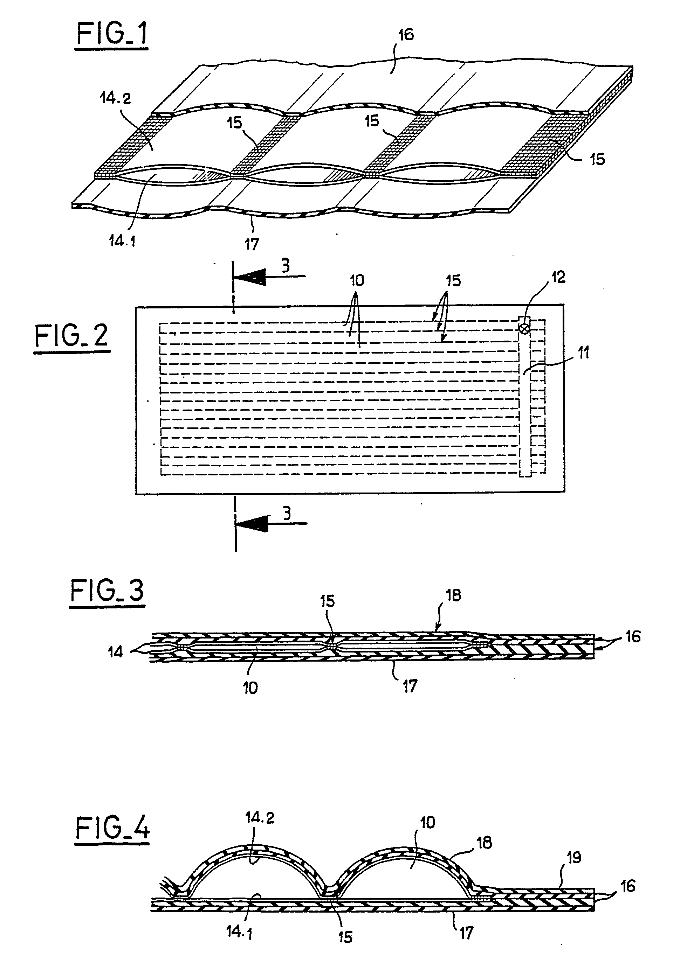

Des exemples de réalisation de l'invention sont maintenant décrits ci-dessous en référence aux dessins ci-joints dans lesquels: la figure 1 est une vue schématique en perspective d'une portion de tricot Jersey double caoutchouté, la figure 2 est une vue d'ensemble d'une gaine de dégivrage montrée à plat,

la figure 3 est une coupe transversale selon 3—3 de la figure 2 et la figure 4 une coupe transversale semblable ou dégivreur dont les chambres sont gonflées,

la figure 5 est une vue en coupe d'un autre mode de réalisation,

les figures 6 et 7 sont des vues en perspective et en coupe transversale illustrant un autre mode de réalisation.

La forme rectangulaire de dégivreur illustré sur la figure 2 est évidement schématique car cette forme générale peut varier en fonction de la forme de la surface support à équiper, par exemple un bord d'attaque d'une aile d'avion. Dans l'exemple illustré ce dégivreur comprend un seul groupe de chambres tubulaires gonflables 10 juxtaposées parallèlement les unes aux autres dans le sens longitudinal de la gaine de sorte que ces chambres se trouvent être parallèles au bord d'attaque de l'aile lorsque la gaine est montée. Ces chambres 10 sont, d'une manière en soi connue, mises en communication avec une chambre d'alimentation 11 située transversalement à une extrémité. D'autres arrangements sont possibles. On peut ne pas avoir de chambre d'alimentation 11 ou bien on peut avoir par exemple sur le même gaine de dégivrage plusieurs groupes de chambres tubulaires parallèles, avec ou sans chambres d'alimentation. Dans tous les cas cependant la gaine est reliée par une valve 12 à un dispositif permettant d'envoyer de l'air sous pression dans les chambres 10 et de l'en extraire, le gonflage pouvant intéresser simultanément toutes les chambres ou certaines d'entre elles alternativement selon les problèmes de dégivrage rencontrés.

Les chambres tubulaires gonflables 10 sont constituées au moyen du tissu double 14 tricoté en armure Jersey dont il a été question, ce tricot formant deux couches distinctes 14.1—14.2 qui sont réunies à intervalles suivant les zones linéaires espacées 15 résultant de l'intertricotage des fils de ces couches. Ce tricot est illustré sur la figure 1 avec les parois des chambres légèrement écartées mais il est précisé que ce tricot est sensiblement plat à l'état normal de sorte qu'il peut être manipulé et travaillé comme un tissu simple ordinaire. Ce tricot double est traité de façon à avoir une bonne adhérence en caoutchouc puis il est caoutchouté sur ses deux faces extérieures par calandrage ou frictionnage avec un mélange élastomérique convenable 16, par exemple à base de caoutchouc naturel ou de chloroprène. L'ensemble du tricot caoutchouté est ensuite pris entre une couche de base 17 en caoutchouc et une couche de revêtement 18 en caoutchouc de même nature ou en caoutchouc plus résistant à l'abrasion tel que du polyuréthane qui constituera la face extérieure de la gaine de dégivrage.

Au cours de la confection on fait déborder sur la périphérie 19 du tricot les couches d'enduction 16 et/ou les couches de base 17 et de revêtement 18 pour fermer les extrémités des chambres 10 et protéger les bords du tricot 14. On réserve évidemment les raccordements et intercommunications de circulation d'air comme habituellement. L'ensemble est alors vulcanisé et rendu prêt à être fixé, par exemple par collage sur la face support à protéger du givrage. Une fois le dégivreur fixé, la face inférieure est bloquée par la rigidité du support de sorte que, en service seules les parois supérieures 14.2 des chambres se déforment lors du gonflage.

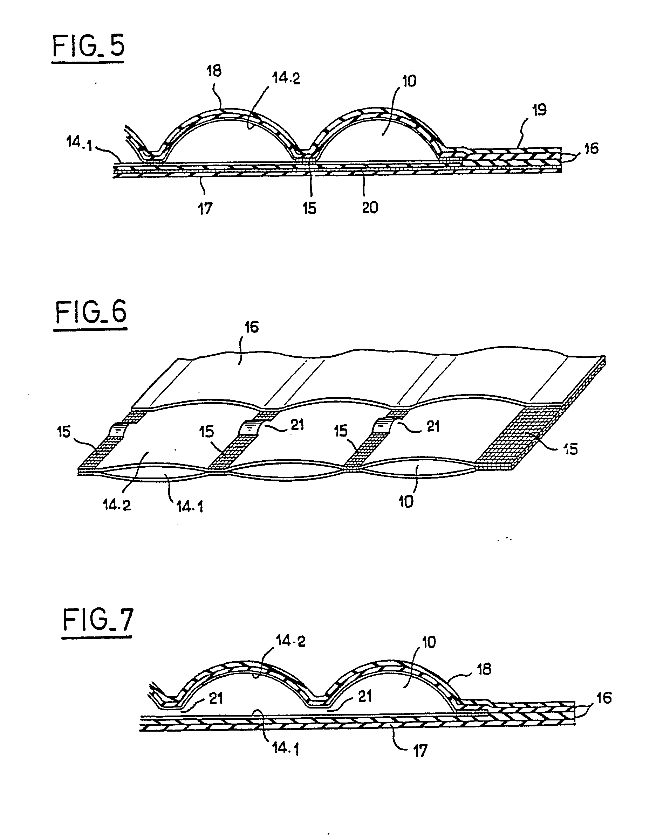

Le dégivreur illustré sur la figure 5 est semblable au précédent sauf en ce que un tissu de renforcement 20, en tissu tissé sensiblement inextensible en tous sens est interposé entre la couche de base 17 et la couche interne 16 du dégivreur, ce qui rend à peu près inextensible l'ensemble de la partie interne qui est fixée par collage sur la surface support à protéger du givrage.

Le dégivreur illustré sur les figures 6 et 7 est semblable au premier sauf en ce que les zones de liaison longitudinales intertricotées 15 sont interrompues de place en place suivant de courtes longueurs pour réserver des canaux transversaux 21 de communication entre les chambres voisines 10. Ces canaux peuvent être utilisés lorsque la perméabilité transversale des zones de liaison est insuffisante, pour accélérer le passage de l'air de gonflage d'une chambre à l'autre.

**Revendications**

1. Dégivreur pneumatique à chambres gonflables multiples, en tissu caoutchouté, dans lequel l'ensemble des chambres (10) ou d'un groupe de chambres est constitué d'un tissu tricoté double caoutchouté sur ses faces extérieures formant deux couches séparées (14.1—14.2) réunies suivant des zones linéaires espacées (15) intertricotées d'une couche à l'autre pour délimiter des chambres tubulaires juxtaposées, caractérisé en ce que les zones linéaires intertricotées sont orientées dans le sens longitudinal du tricot et ce tricot double est un tricot Jersey à taux d'extensibilité transversale égal à au moins deux fois son taux d'extensibilité longitudinale.

2. Dégivreur selon la revendication 1, caractérisé en ce que les zones linéaires intertricotées de liaison (15) entre les deux couches de tricot intéressent un faible nombre de rangées voisines de mailles, de l'ordre de 2 à 5 rangées et ces zones de liaison intertricotées sont perméables pour autoriser la diffusion du fluide de gonflage d'une chambre à l'autre.

3. Dégivreur pneumatique selon l'une des revendications précédentes, caractérisé en ce que le tricot double est caoutchouté sur ses faces extérieures et adhère d'un côté à une couche de base (17) et de l'autre côté à une couche de revêtement caoutchoutée (18).

4. Dégivreur selon l'une des revendications précédentes, caractérisé en ce qu'un tissu inextensible de renforcement (20) est interposé entre la couche de base et la couche interne du tricot double.

5. Dégivreur selon l'une des revendications précédentes, caractérisé en ce que les zones de liaison longitudinales intertricotées (15) présentent de courtes interruptions formant des passages transversauz (21) de communication entre les chambres voisines (10).

**Patentansprüche**

1. Pneumatische Enteisungseinrichtung aus einem gummibeschichteten Textilerzeugnis mit mehreren aufblasbaren Kammern, wobei alle oder ein Teil der Kammern (10) aus einem auf beiden Aussenseiten mit Gummi od. dgl. beschichteten doppelt gestrickten Textilerzeugnis bestehen, das zwei getrennte Lagen (14.1 und 14.2) bildet, die in im gegenseitigen Abstand angeordneten geradlinigen Bereichen (15) miteinander verbunden sind, indem eine Lage mit der anderen verstrickt ist, um nebeneinanderliegende rohrförmige Kammern zu begrenzen, dadurch gekennzeichnet, dass die miteinander verstrickten geradlinigen Bereiche in Längsrichtung des Gestrickes angeordnet sind und dass das Doppelgestrick ein Jerseygestrick ist, dessen Querdehnbarkeit mindestens zweimal grösser ist als seine Längsdehnbarkeit.

2. Enteisungseinrichtung nach Anspruch 1, dadurch gekennzeichnet, dass die miteinander verstrickten geradlinigen Verbindungsbereiche (15) zwischen den beiden Gestricklagen eine geringe Anzahl benachbarter Maschenreihen in der Grössenordnung von zwei bis fünf Maschenreihen umfassen und dass diese miteinander verstrickten Verbindungsbereiche durchlässig sind, damit das zum Aufblasen verwendete Fluid von einer Kammer in die andere gelangen kann.

3. Enteisungseinrichtung nach Anspruch 1 oder 2, dadurch gekennzeichnet, dass das Doppelgestrick auf seinen Aussenseiten mit Gummi od. dgl. beschichtet ist und an einer Seite mit einer Bodenschicht (17) und an der anderen Seite mit einer Deckschicht (18) aus Gummi od. dgl. verklebt ist.

4. Enteisungseinrichtung nach einem der Ansprüche 1 bis 3, dadurch gekennzeichnet, dass ein undehnbares Verstärkungsgewebe (20) zwischen der Bodenschicht (17) und der Innenschicht (16) des Doppelgestricks angeordnet ist.

5. Enteisungseinrichtung nach einem der Ansprüche 1 bis 4, dadurch gekennzeichnet, dass die miteinander verstrickten längsgerichteten Verbindungsbereiche (15) kurze Unterbrechungen aufweisen, die Querverbindungen (21) zwischen benachbarten Kammern (10) bilden.

**Claims**

1. A pneumatic de-icer comprising multiple inflatable chambers, formed from rubberised fabric, in which the totality of the chambers (10) or a group of chambers is formed from a knitted double cloth rubberised on its outer surfaces forming two separate layers (14.1—14.2) joined together along spaced-apart linear areas (15) interknitted between one layer and the other in order to delimit juxtaposed tubular chambers, characterised in that the interknitted linear areas are oriented in the longitudinal direction of the knitted fabric and this double knitted fabric is a knitted Jersey fabric having a ratio of transverse extensibility equal to at least twice its ratio of longitudinal extensibility.

2. A de-icer according to claim 1, characterised in that the interknitted linear connecting areas (15) between the two layers of the knitted fabric cover a small number of adjacent rows of stitches, of the order of 2 to 5 rows and in that these interknitted connecting areas are permeable in order to permit diffusion of the inflating fluid from one chamber to the other.

3. A pneumatic de-icer according to one of the preceding claims, characterised in that the double knitted fabric is rubber-coated on its outer surfaces and adheres at one side to a base layer (17) and at the other side to a rubberised covering layer (18).

4. A de-icer according to one of the preceding claims, characterised in that an inextensible reinforcing fabric (20) is interposed between the base layer and the internal double-knitted fabric layer.

5. A de-icer according to one of the preceding claims, characterised in that the interknitted longitudinal connecting areas (15) incorporate short interruptions forming transverse passages (21) for communication between the adjacent chambers (10).

FIG_1

FIG_2

FIG_3

FIG_4

## FIG. 5

## FIG. 6

## FIG. 7